**Europäisches Patentamt**

**European Patent Office**

**Office européen des brevets**

(19)

(11) Veröffentlichungsnummer : **0 135 875**
**B1**

(12)

# EUROPÄISCHE PATENTSCHRIFT

(45) Veröffentlichungstag der Patentschrift :
**30.11.88**

(51) Int. Cl.⁴ : **F 16 F   1/14, A 47 C   1/024**

(21) Anmeldenummer : **84110702.2**

(22) Anmeldetag : **07.09.84**

(54) **Vorrichtung zur gefederten Schwenkbewegung eines Bauteiles.**

(30) Priorität : **28.09.83 DE 3335148**

(43) Veröffentlichungstag der Anmeldung :
**03.04.85 Patentblatt 85/14**

(45) Bekanntmachung des Hinweises auf die Patenterteilung : **30.11.88 Patentblatt 88/48**

(84) Benannte Vertragsstaaten :
**AT BE CH DE GB IT LI NL SE**

(56) Entgegenhaltungen :
**DE-U- 1 752 254**
**FR-A- 1 163 537**
**FR-A- 2 025 930**
**GB-A- 1 165 713**
**GB-A- 2 024 141**
**US-A- 3 253 858**

(73) Patentinhaber : **Wilkhahn Wilkening + Hahne GmbH**
**+ Co.**
**Landerfeld 8**
**D-3252 Bad Münder 2 (DE)**

(72) Erfinder : **Franck, Klaus**
**Spannhagenstrasse 43**
**D-3000 Hannover 51 (DE)**

(74) Vertreter : **Tetzner, Volkmar, Dr.-Ing. Dr. jur.**
**Van-Gogh-Strasse 3**
**D-8000 München 71 (DE)**

**Beschreibung**

Die Erfindung betrifft eine Vorrichtung (entsprechend dem Oberbegriff des Anspruches 1) zur gefederten Schwenkbewegung eines Bauteiles, insbesondere eine Neigemechanik für eine Sitzeinrichtung mit einem kippbaren Teil.

Eine Vorrichtung der im Oberbegriff des Anspruches 1 genannten Art ist durch die US-A-3 253 858 bekannt und dient dort zur gefederten Schwenkbewegung eines Sessels um eine vertikale Schwenkachse. Der Federstab ist hierbei mit seinem unteren Ende in einem mit dem Fuß des Sessels verbundenen, ortsfesten Widerlager angeordnet, während das obere Ende des Federstabes in die radiale Nut eines mit dem Sessel schwenkbaren Lagers eingreift.

Der Erfindung liegt die Aufgabe zugrunde, eine Vorrichtung der im Oberbegriff des Anspruches 1 vorausgesetzten Art so auszubilden, daß sich eine einfache und leichte Konstruktion ergibt, nur ein kleines Bauvolumen erforderlich ist und eine hohe Betriebssicherheit gewährleistet ist.

Diese Aufgabe wird erfindungsgemäß durch die kennzeichnenden Merkmale des Anspruches 1 gelöst.

Zweckmäßige Ausgestaltungen der Erfindung sind Gegenstand der Unteransprüche.

Bei der erfindungsgemäßen Vorrichtung wird der in allen drei Lagern um seine Achse drehbare Federstab nicht auf Torsion, sondern ausschließlich auf Biegung beansprucht, was eine hohe Betriebssicherheit ergibt.

Die Anordnung des Federstabes in drei Lagern, von denen das Mittellager ortsfest angeordnet ist, während die beiden Außenlager mit dem schwenkbaren Bauteil verbunden und um eine gegenüber der Achse des Federstabes räumlich versetzte Achse drehbar sind, ermöglicht eine besonders einfache und raumsparende Verbindung des Federstabes mit dem schwenkbaren Bauteil. Hierdurch ergibt sich eine einfache, leichte und raumsparende Konstruktion.

Die erfindungsgemäße Vorrichtung ist zwar insbesondere als Neigemechanik für eine Sitzeinrichtung für einen kippbaren Teil bestimmt. Sie kann jedoch vorteilhaft auch in zahlreichen anderen Anwendungsfällen eingesetzt werden, in denen ein Bauteil im Betrieb eine gefederte Schwenkbewegung durchführt. So eignet sich die erfindungsgemäße Vorrichtung beispielsweise zur automatischen Rückstellung von Türen, Klappen, Hebeln und dgl., die gegen Federkraft aus ihrer Ruhelage ausgelenkt werden.

Einige Ausführungsbeispiele der Erfindung sind in der Zeichnung schematisch veranschaulicht. Es zeigen

Fig. 1a und 1b ein erstes Ausführungsbeispiel der Erfindung (in der Ruhelage und in der ausgelenkten Lage),

Fig. 2a und 2b ein zweites Ausführungsbeispiel der Erfindung,

Fig. 3 eine Schemadarstellung der Anwendung der Erfindung bei einem Sitzmöbel.

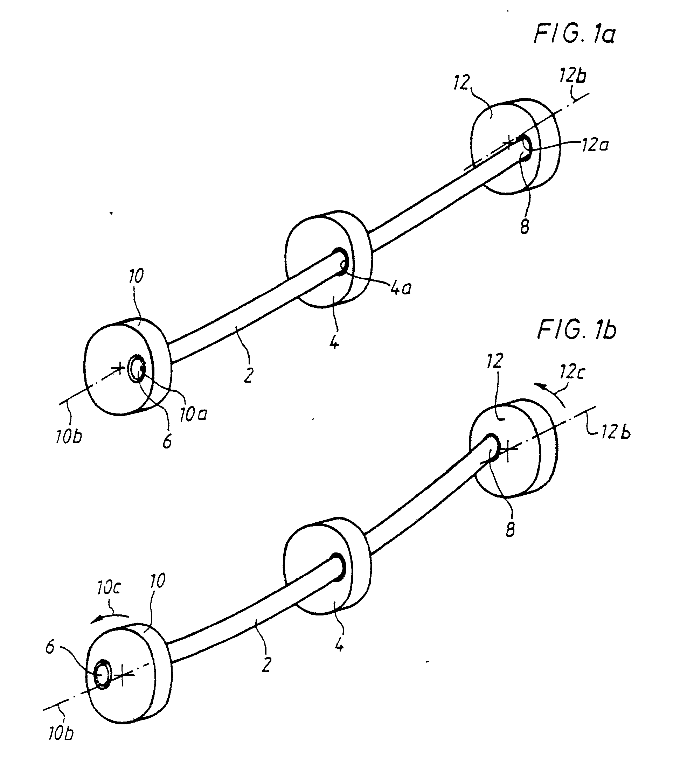

Die in Fig. 1a dargestellte Vorrichtung enthält einen Federstab 2, der an drei Stellen seiner Länge, nämlich im Bereich seiner Mitte und an seinen beiden Enden, in je einem Lager 4 bzw. 10, 12 angeordnet ist, und zwar ist der Federstab 2 in den Lagerbohrungen 4a, 10a und 12a um seine Achse frei drehbar gelagert. Der Federstab 2 kann in einem der drei Lager gegen Längsverschiebung in geeigneter Weise gesichert sein.

Das Mittellager 4 stellt das im Betriebszustand feststehende Widerlager dar. Die beiden Außenlager 10 und 12 sind demgegenüber um ihre Achse 10b bzw. 12b drehbar. Diese Achsen 10b, 12b der Außenlager 10, 12 sind gegenüber der Achse des Federstabes 2 räumlich versetzt. Die Lagerbohrungen 10a, 12a sind somit exzentrisch in den als Rundkörper ausgebildeten Außenlagern 10 und 12 angeordnet.

Die drehbaren Außenlager 10 und 12 sind mit dem schwenkbaren Bauteil (in Fig. 1 nicht dargestellt) verbunden. Führt dieser Bauteil (beispielsweise die Sitzfläche oder Rückenlehne eines Sitzmöbels) eine Schwenk- bzw. Kippbewegung aus, so werden die Außenlager 10 und 12 in Richtung der Pfeile 10c bzw. 12c geschwenkt. Da das Mittellager 4 hierbei feststeht und der Federstab 2 in den Lagerbohrungen 4a, 10a, 12a frei drehbar gelagert ist, erfährt der Federstab 2 eine Biegeauslenkung in der aus Fig. 1b ersichtlichen Weise. Hierdurch wird eine elastische Rückstellkraft erzeugt, die den mit den Außenlager 10 und 12 verbundenen schwenkbaren Bauteil in seine Ausgangslage zurückzuführen sucht.

Aus der obigen Beschreibung wird deutlich, daß weder das Mittellager 4, noch die Außenlager 10 und 12 unbedingt als Rundkörper ausgebildet sein müssen. So können beispielsweise die Außenlager 10 und 12 auch in Form einfacher Hebel ausgebildet sein. Wesentlich ist lediglich, daß diese Außenlager 10 und 12 um eine Achse 10b bzw. 12b schwenkbar sind, die gegenüber der Achse des Federstabes 2 bzw. den Lagerbohrungen 10a, 12a räumlich versetzt ist.

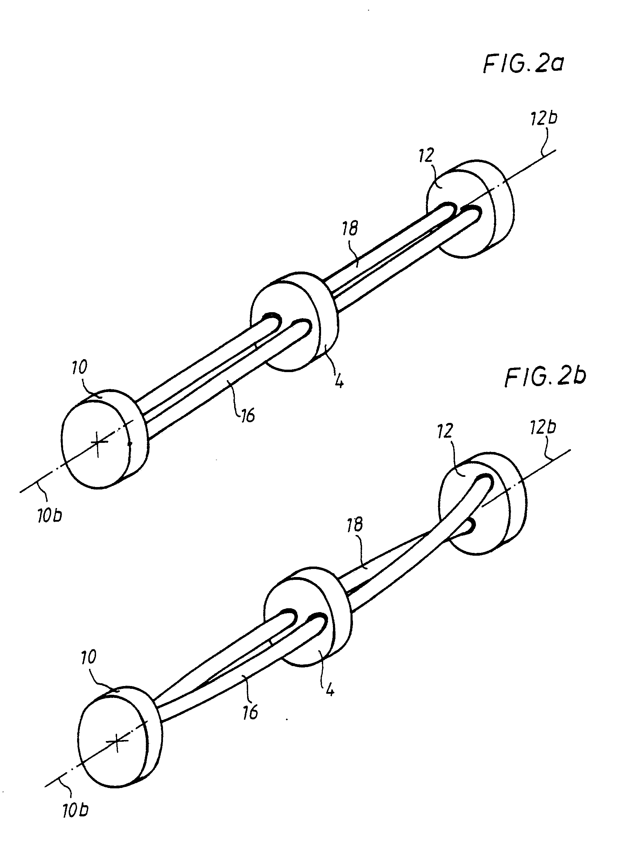

Bei dem in Fig. 2 dargestellten weiteren Ausführungsbeispiel wird das Federsystem durch zwei Federstäbe 16, 18 gebildet, die in den drehbaren Außenlagern 10 und 12 symmetrisch zu den Drehachsen 10b bzw. 12b dieser Lager angeordnet sind. Ebenso sind die Federstäbe 16 und 18 auch symmetrisch durch das im Betriebszustand feststehende Mittellager 4 hindurchgeführt.

Durch Verwendung mehrerer Federstäbe läßt sich auf einfache Weise eine Erhöhung der elastischen Rückstellkraft erreichen, ohne daß zusätzlicher Bauraum benötigt wird. Es versteht sich, daß gewünschtenfalls auch mehr als zwei Federstäbe vorgesehen werden können.

Ebenso ist es im Rahmen der Erfindung auch möglich, die Zahl der Lager zu variieren. Außer den in den Fig. 1 und 2 dargestellten Ausführungen mit insgesamt drei Lagern sind ferner auch Varianten mit einer größeren Zahl von Lagern möglich.

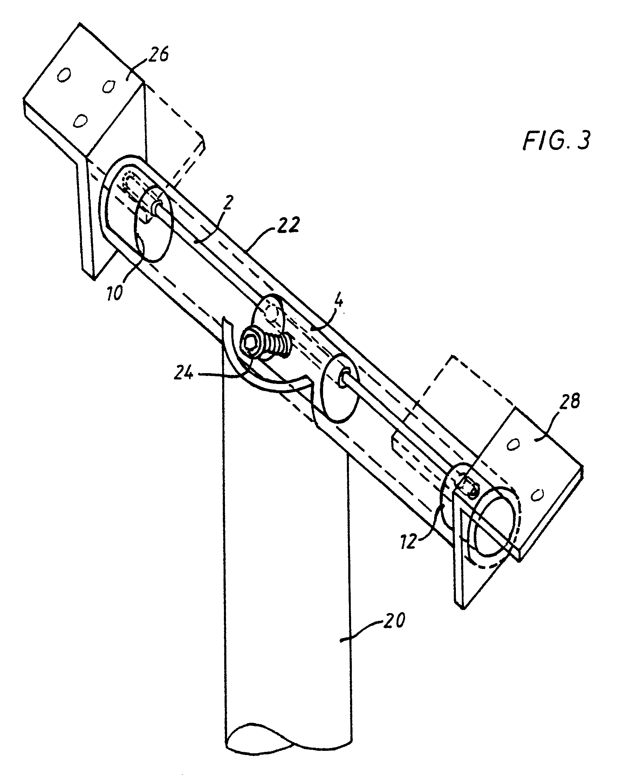

Fig. 3 veranschaulicht die Anwendung des Ausführungsbeispieles der Fig. 1 bei einem Sitzmöbel (beispielsweise einem Drehsessel), von dem lediglich die Mittelsäule 20 des Untergestelles dargestellt ist. Der Federstab 2, das Mittellager 4 und die beiden drehbaren Außenlager 10 und 12 sind in einem Querrohr 22 angeordnet, das fest mit der Mittelsäule 20 verbunden ist. Das Mittellager 4 ist entweder drehfest und unverstellbar im Querrohr 22 angeordnet oder — wie dargestellt — im Querrohr 22 in Umfangsrichtung verstellbar und in der gewählten Stellung fixierbar. Zur Verstellung und/oder Fixierung des Mittellagers 4 im Querrohr 22 ist eine Schraube 24 vorgesehen.

Mit den Außenlagern 10 und 12 sind Winkeleisen 26, 28 fest verbunden, deren freie Schenkel nach außen oder (gestrichelt dargestellt) nach innen weisen und mit denen der zu kippende Bauteil, beispielsweise beim Drehsessel die Sitzfläche, verbunden ist.

Die Verwendung der Schraube 24 bietet die Möglichkeit, die Vorspannung des aus dem Federstab 2, dem Mittellager 4 und den beiden Außenlagern 10 und 12 bestehenden elastischen Systemes in gewünschter Weise einzustellen. Dies kann beispielsweise dadurch erreicht werden, daß die Sitzfläche nach vorn über die Normalstellung hinaus kippbar ausgebildet ist und das Mittellager vor der Rückbewegung der Sitzfläche in die Normalstellung mit Hilfe der Schraube 24 fixiert wird. Die Verstellung der Vorspannung kann auch dadurch erfolgen, daß beispielsweise mit Hilfe einer Schraube tangentiale Kräfte auf das Mittellager 4 zum Drehen dieses Mittellagers 4 (relativ zum Querrohr 22) ausgeübt werden.

Es versteht sich, daß der Drehwinkel der mit dem schwenkbaren Bauteil verbundenen drehbaren Lager 10 und 12 einstellbar gemacht werden kann, beispielsweise durch Anschläge, die zweckmäßig einstellbar sind.

Es ist ferner im Rahmen der Erfindung möglich, eine Arretierung der mit dem schwenkbaren Bauteil verbundenen drehbaren Lager in wählbaren Winkelstellungen vorzusehen, bei einer Sitzeinrichtung beispielsweise in der vordersten Sitzposition sowie in verschiedenen Zwischenstellungen.

Die bei der erfindungsgemäßen Vorrichtung verwendeten Federstäbe können aus den verschiedensten elastischen, ermüdungsbeständigen Materialien bestehen. Außer Federstahl kommen insbesondere Stäbe aus biegeelastischen Kunststoffen und aus Glasfasern in Betracht.

Es kann beispielsweise ein Bündel von Federstäben, vorzugsweise aus glasfaserverstärktem Polyester, Verwendung finden.

## Patentansprüche

1. Vorrichtung zur gefederten Schwenkbewegung eines Bauteiles, insbesondere Neigemechanik für eine Sitzeinrichtung mit einem kippbaren Teil, enthaltend

a) wenigstens einen Federstab (2),

b) zur Aufnahme des Federstabes (2) dienende Lager (4, 10, 12), die teils ortsfest angeordnet, teils mit dem schwenkbaren Bauteil verbunden und mit diesem um eine gegenüber der Achse des Federstabes räumlich versetzte Achse (10b, 12b) drehbar sind, gekennzeichnet durch folgende Merkmale :

c) der Federstab (2) ist im mittleren Bereich seiner Länge in einem ortsfest angeordneten Mittellager (4) und an seinen beiden Enden (6, 8) in je einem mit dem schwenkbaren Bauteil verbundenen, drehbaren Außenlager (10, 12) angeordnet ;

d) in jedem der drei Lager (4, 10, 12) ist der Federstab (2) um seine Achse drehbar ;

e) jedes der beiden drehbaren Außenlager (10, 12) enthält eine exzentrisch zur Drehachse (10b, 12b) dieses Lagers angeordnete Lagerbohrung (10a, 12a) zur drehbaren Aufnahme des Federstabes (2).

2. Vorrichtung nach Anspruch 1, dadurch gekennzeichnet, daß das Federsystem durch mehrere Federstäbe (16, 18) gebildet wird.

3. Vorrichtung nach Anspruch 2, dadurch gekennzeichnet, daß die Federstäbe (16, 18) in den drehbaren Außenlagern (10, 12) symmetrisch zu deren Drehachse (10b, 12b) angeordnet sind.

4. Vorrichtung nach Anspruch 1, dadurch gekennzeichnet, daß das ortsfest angeordnete Mittellager (4) zur Einstellung der Vorspannung des Federstabes (2) verstellbar ist.

5. Vorrichtung nach Anspruch 4, dadurch gekennzeichnet, daß das ortsfest angeordnete Mittellager (4) als Rundkörper ausgebildet, mit einer exzentrisch zu seiner Achse angeordneten Lagerbohrung (4a) zur drehbaren Aufnahme des Federstabes (2) versehen und zur Einstellung der Vorspannung des Federstabes durch Drehung um die Achse des Lagers verstellbar ist.

6. Vorrichtung nach Anspruch 1, dadurch gekennzeichnet, daß der Drehwinkel der mit dem schwenkbaren Bauteil verbundenen Außenlager (10, 12) einstellbar ist.

7. Vorrichtung nach Anspruch 1, dadurch gekennzeichnet, daß die mit dem schwenkbaren Bauteil verbundenen Außenlager (10, 12) in wählbaren Winkelstellungen, bei einer Sitzeinrichtung insbesondere in vorderster Sitzposition und in verschiedenen Zwischenstellungen, arretierbar sind.

8. Vorrichtung nach Anspruch 1 für eine Sitzeinrichtung, deren Sitzfläche und/oder Rückenlehne um eine horizontale Achse kippbar ist, dadurch gekennzeichnet, daß das Mittellager (4) mit der Mittelsäule (20) des Untergestelles der Sitzeinrichtung und die Außenlager (10, 12) mit dem kippbaren Teil der Sitzeinrichtung verbunden sind.

9. Vorrichtung nach Anspruch 8, dadurch gekennzeichnet, daß mit der Mittelsäule (20) des Untergestelles der Sitzeinrichtung ein den Federstab (2) aufnehmendes Querrohr (22) verbunden ist, in dessen mittlerem Bereich das Mittellager (4) fest angeordnet ist und in dessen Endbereichen die beiden Außenlager (10, 12) drehbar vorgesehen sind.

10. Vorrichtung nach den Ansprüchen 4 und 9, dadurch gekennzeichnet, daß das Mittellager (4) im Querrohr (22) in Umfangsrichtung verstellbar und in der gewählten Winkellage fixierbar ist.

11. Vorrichtung nach Anspruch 10, dadurch gekennzeichnet, daß zur Verstellung und/oder Fixierung des Mittellagers (4) im Drehrohr (22) eine Schraube (24) vorgesehen ist.

## Claims

1. Device for sprung tilting movement of a component, especially an inclining mechanism for a seat arrangement with a part which can be tilted, comprising
   a) at least one spring rod (2),
   b) bearings (4, 10, 12) which serve to receive the spring rod (2), are in part arranged stationary and in part connected to the tiltable component and are rotatable with the latter about an axis (10b, 12b) which is spatially offset relative to the axis of the spring rod,
characterised by the following features :
   c) the spring rod (2) is arranged in the central part of its length in a stationary central bearing (4) and each of its ends is arranged in a rotatable bearing (10, 12) which is connected to the tiltable component ;
   d) the spring rod (2) is rotatable about its axis in each of the three bearings (4, 10, 12) ;
   e) each of the two rotatable outer bearings (10, 12) contains a bearing bore (10a, 12a) which is arranged eccentrically with respect to the axis of rotation (10b, 12b) of this bearing for rotatable accommodation of the spring rod (2).

2. Device as claimed in claim 1, characterised in that the spring system is formed by a plurality of spring rods (16, 18).

3. Device as claimed in claim 3, characterised in that the spring rods (16, 18) are arranged in the rotatable bearing (10 or 12 respectively) so as to be symmetrical with the axis of rotation (10b or 12b respectively) thereof.

4. Device as claimed in claim 1, characterised in that the central bearing (4) which is arranged stationary is movable for adjustment of the initial tension of the spring rod (2).

5. Device as claimed in claim 4, characterised in that the central bearing (4) which is arranged stationary is constructed as a round body, provided with a bearing bore (4a) which is arranged eccentrically with respect to its axis for rotatable accommodation of the spring rod (2) and is movable by rotation about the axis of the bearing in order to adjust the initial tension of the spring rod.

6. Device as claimed in claim 1, characterised in that the angle of rotation of the rotatable bearing (10 or 12) which is connected to the tiltable component is adjustable.

7. Device as claimed in claim 1, characterised in that the rotatable bearings (10, 12) which are connected to the tiltable component can be locked in selected angular positions, in the case of a seat arrangement in particular in the most forward seat position and in various intermediate positions.

8. Device as claimed in claim 1 for a seat arrangement the seat surface and/or back rest of which is tiltable about a horizontal axis, characterised in that the central bearing (4) is connected to the central column (20) of the supporting frame of the seat arrangement and the outer bearings (10, 12) are connected to the tiltable part of the seat arrangement.

9. Device as claimed in claim 8, characterised in that a cross tube (20) which accommodates the spring rod (2) and has the central bearing (4) arranged fixed in its central region and the two outer bearings (10, 12) arranged rotatably in its end regions is connected to the central column (20) of the supporting frame of the seat arrangement.

10. Device as claimed in claims 4 and 9, characterised in that the central bearing (4) can be moved in the peripheral direction in the cross tube (22) and can be fixed in the selected angular position.

11. Device as claimed in claim 10, characterised in that a screw (24) is provided for moving and/or fixing the central bearing (4) in the cross tube (22).

## Revendications

1. Dispositif à pivotement élastique d'un élément de construction, en particulier mécanisme d'inclinaison d'un siège à élément basculant, comprenant :
   a) au moins un ressort en barre (2),
   b) des supports (4, 10, 12) de montage du ressort en barre (2), dont certains sont disposés en position fixe et d'autres sont reliés à l'élément pivotant et sont rotatifs avec ce dernier autour d'un axe (10b, 12b) qui est décalé dans l'espace par rapport à l'axe du ressort en barre,
caractérisé par les particularités suivantes :
   c) le ressort en barre (2) est monté approximativement au milieu de sa longueur dans un support médian (4) occupant une position fixe et à chacune des deux extrémités (6, 8) dans un support extérieur rotatif (10, 12) qui est relié à l'élément pivotant ;
   d) le ressort en barre (2) est rotatif autour de son axe dans chacun des trois supports (4, 10, 12) ;
   e) chacun des deux supports extérieurs rotatifs (10, 12) comporte un trou de montage (10a, 12a) situé excentriquement par rapport à son axe de rotation (10b, 12b) et destiné à loger le ressort en barre (2) en lui permettant de tourner.

2. Dispositif selon la revendication 1, caractérisé en ce que le système élastique est formé de plusieurs ressorts en barre (16, 18).

3. Dispositif selon la revendication 2, caractérisé en ce que les ressorts en barre (16, 18) sont montés dans les supports extérieurs rotatifs (10, 12) symétriquement par rapport à l'axe de rotation (10b, 12b) de ces derniers.

4. Dispositif selon la revendication 1, caractérisé en ce que le support médian (4) monté en position fixe est réglable pour permettre le réglage de la contrainte initiale du ressort ·en barre (2).

5. Dispositif selon la revendication 4, caractérisé en ce que le support médian fixe (4) est réalisé sous la forme d'une pièce circulaire comprenant un trou de montage (4a) situé excentriquement par rapport a son axe et destiné à loger le ressort en barre (2) en lui permettant de tourner, cette pièce circulaire étant réglable par rotation autour de son axe pour permettre le réglage de la contrainte initiale du ressort en barre.

6. Dispositif selon la revendication 1, caractérisé en ce que l'angle de rotation des supports extérieurs (10, 12) reliés à l'élément pivotant est réglable.

7. Dispositif selon la revendication 1, caractérisé en ce que les supports extérieurs (10, 12) reliés à l'élément pivotant peuvent être arrêtés à des positions angulaires sélectionnables, en particulier à la position d'assise la plus avancée et à différentes positions intermédiaires lorsqu'il s'agit d'un siège.

8. Dispositif selon la revendication 1, destiné à un siège dont la surface sur laquelle on s'assoit et/ou le dossier peut pivoter autour d'un axe horizontal, caractérisé en ce que le support médian (4) est relié à la colonne centrale (20) du châssis du siège et les supports extérieurs (10, 12), à l'élément pivotant ou basculant du siège.

9. Dispositif selon la revendication 8, caractérisé en ce qu'un tube transversal (22) de logement du ressort en barre (2) est relié à la colonne centrale (20) du châssis du siège, le support médian (4) étant fixé dans le milieu de ce tube et les deux supports extérieurs (10, 12) étant rotatifs dans les extrémités de ce dernier.

10. Dispositif selon les revendications 4 et 9, caractérisé en ce que le support médian (4) est réglable en rotation dans le tube transversal (22) et immobilisable à la position angulaire adoptée.

11. Dispositif selon la revendication 10, caractérisé en ce qu'une vis (24) est prévue pour le réglage et/ou la fixation du support médian (4) dans le tube transversal (22).

FIG. 1a

FIG. 1b

FIG.2a

FIG.2b

0 135 875

FIG. 3

3